# EUROPEAN PATENT APPLICATION

(11) **EP 4 538 645 A1**
(43) Date of publication of application: **16.04.2025**
(21) Application number: 24204008.7
(22) Date of filing: 01.10.2024
(51) Int. Cl.: G01C 21/16, G01C 21/20

(54) **A NAVIGATION ASSISTANCE DEVICE FOR A COGNITIVELY IMPAIRED PERSON**

(30) Priority: 11.10.2023 NL 2036006
(71) Applicant: Technische Universiteit Eindhoven, 5612 AE Eindhoven (NL)
(72) Inventor: BRANKAERT, Rens Gerardus Antonius, EINDHOVEN (NL); OFFERMANS, Serge Alexander Marie, EINDHOVEN (NL)
(74) Representative: Algemeen Octrooi- en Merkenbureau B.V.

(57) **Abstract**

A navigation assistance device for a cognitively impaired person comprising:
- a position sensor arranged for receiving signals from a satellite-based positioning system and arranged for determining a geographic location of the device based on the signals received;
- an orientation sensor arranged for determining an orientation of the device relative to the earth;
- a register arranged for registering a target location;
- a processing unit arranged for receiving the position of the device from the position sensor, the orientation of the device from the orientation sensor, and the target location from the register and arranged for determining a pointing direction parameter based on the position of the device, the orientation of the device and the target location;
- a pointing unit comprising a visible pointer and arranged for receiving the pointing direction parameter and directing the visible pointer towards the target location based on the pointing direction parameter.

## Description

Known navigation systems for a cognitively impaired person such as a person with dementia are relatively complicated, in that they produce complex feedback and/or require the user to perform relatively complex tasks, or they are designed based on the presumption that it is not preferred to give cognitively impaired individuals control over their movements and that a caretaker is in a better position to guide them. In other words, the known solution is designed based on the presumption that a caretaker will guide and make decisions for a cognitively challenged person, rather than giving the cognitively challenged individual a guidance device that he/she can use on their own.

The known navigation systems comprise a GPS system provided with a GPS sensor and tracking software, operated by smart devices or webul, for family members or caregivers to track the GPS sensor and thereby the person.

It is an object of the present disclosure to provide a relative uncomplicated navigation device that may be used by cognitively impaired persons, so that they can navigate their way towards a given (home) location, enabling them to be more self-sufficient.

The object is realised in that the navigation assistance device according to the present disclosure comprises:
- a position sensor arranged for receiving signals from a satellite-based positioning system and arranged for determining a geographic location of the device based on the signals received;
- an orientation sensor arranged for determining an orientation of the device relative to the earth and/or a previous geographic location of the device;
- a register arranged for registering a target location;
- a processing unit arranged for receiving the position of the device from the position sensor, the orientation of the device from the orientation sensor, and the target location from the register and arranged for determining a pointing direction parameter based on the position of the device, the orientation of the device and the target location;
- a pointing unit comprising a visible pointer and arranged for receiving the pointing direction parameter and directing the visible pointer towards the target location based on the pointing direction parameter.

By using the registered target location, the pointing direction parameter and the pointing unit a device is realised wherein the visible pointer points, at least during use, points to a predetermined location being the target location.

The navigation assistance device according to the present disclosure further differs from known navigation system in that the navigation assistance device does not provide a route to the target location. Instead the navigation assistance device functions similar to a compass wherein the visible pointer points to the target location which is not necessarily the magnetic north pole, but rather the target location (e.g. home).

The orientation sensor may function as a compass to determine in which direction the visible pointer should point.

The navigation assistance device according to an aspect of the present disclosure has a housing having an interior and an exterior and wherein a position sensor, an orientation sensor, a register, a processing unit, a power source, and at least a portion of a pointing unit are disposed in the interior of the housing. A target location setting mechanism is accessible from the exterior of the housing. No more than one target location is made available for determining the pointing direction parameter by the processing unit.

Preferably, the position sensor comprises a GPS receiver. Within the context of the present disclosure the GPS receiver may include a GPS antenna, a GNSS sensor or another position sensor. Alternatives that may be used are Galileo, Beidou, GLONASS, BDS and QZSS.

In an embodiment, the orientation sensor comprises multi-axis accelerometer and/or an inertial measurement unit for determining the orientation of the device relative to the earth.

In this regard, it is beneficial if the inertial measurement unit comprises at least one of an accelerometer, a magnetometer and a gyroscope.

The device may comprise a receiving unit arranged for receiving the target location and providing the received target location to the register. This is beneficial for allowing a person to store a target location in the device and thereby set the device for use by an cognitively impaired person. This allows for the production of generic devices that may be set for different persons.

The receiving unit may further be arranged for receiving and updated target location and providing the received updated target location to the register, wherein the target location is updated by the updated target location. This is beneficial for allowing use by different persons having different target locations or to allow a change of target location for a specific user.

Preferably, the processing unit is arranged for determining a bearing, preferably an azimuth, based on the vector between the geographic location of the device and the target location.

Within the context of the present disclosure the terms "bearing" and "azimuth" are to be understood as the terms commonly used in land navigation.

In an embodiment, the device is further arranged for determining an angle between the bearing and the orientation of the device, determined by the orientation sensor, wherein the processing unit is further arranged for determining the pointing direction parameter based on the angle.

The device may comprise a power source, preferably an electrical power source such as a rechargeable battery, for powering the device.

In this regard, it is advantageous if the processing unit is arranged for determining that the device is stationary based on the orientation of the device and the updated orientation of the device and switching the processing unit in a power saving mode. This is beneficial for realizing a relative long life of the power source.

Preferably, the processing unit is further arranged for determining that a difference between the pointing direction parameter and an updated pointing direction parameter exceeds a predetermined threshold, wherein the updated pointing direction parameter is based on an updated position of the device and an updated orientation of the device obtained, by the processing unit, at a predetermined period after obtaining the position of the device and the orientation of the device and providing the updated pointing direction parameter to the pointing unit. The predetermined threshold avoids, or at least reduces, that the visible pointer will nervously rotate due to small variations of the bearing.

In a practical embodiment, the visible pointer is a physical element and wherein the pointing unit comprises an actuator for moving the visible pointer, preferably rotating the visible pointer about a rotation axis. The present disclosure relates at least partly on the insight that a providing the visible pointer as a physical element is relatively easy to use for a cognitively impaired person.

In this regard, it is beneficial if the actuator comprises a electromotor for rotating the visible pointer. Preferably the electromotor is a stepper motor, a brushless DC motor, permanent magnet motor, servo motor or other motor of which the position can be accurately controlled.

The device may further comprise a further sensor arranged for determining a direction of the visible pointer relative to a housing of the device.

Preferably, the further sensor is an optical sensor such as an infrared reflective sensor. The infrared sensor is arranged such that the infrared sensor registers when the pointer points towards a 'zero' position. For this purpose, the visible pointer is rotated on startup until the optical sensor registers the visible pointer via a reflection of the radiation emitted by the optical sensor.

After registering, by the optical sensor, of the visible pointer the angle of the visible pointer relative to the 'zero' position may be determined for instance based on the number of steps made by the motor.

Preferably, whenever the visible pointer is registered by the optical sensor, the 'zero' position is updated to maintain a relative accurate positioning of the visible pointer to the target location.

The processing unit may further be arranged for determining an accuracy of the geographic location of the device, the orientation of the device and/or presence of the target location and outputting a status signal, wherein the device further comprises a status indication unit arranged for receiving the status signal and outputting a status of the device providing an indication of the accuracy of the geographic location of the device, the accuracy of the orientation of the device position data and/or presence of the target location.

The status of the device may for instance be that no signal from the satellite-based positioning system is received by the position sensor or alternatively that a signal from a satellite-based positioning system is being received by the position sensor, wherein the omission of the signal is a measure for a low accuracy and the signal being received is a measure for a high accuracy.

The status indication unit may comprises at least one of:
- a light source arranged for emitting visible light towards the person for informing the person about the status of the device;
- a display for informing the person about the status of the device; and
- a sound generator arranged for generating a sound that is within a frequency range that is audible for the person for informing the person about the status of the device.

In case of a high accuracy, the status indication device may for instance emit visible light and/or a sound. Alternatively, in case of low accuracy, visible light and/or a sound may be intermittently emitted.

Preferably, the device incudes a protective feature configured to restrict user access to the target location setting mechanism. In embodiments where the device incudes an on/off switch, a further protective feature configured to restrict user access to the on/off switch may be provided.

In an embodiment, the device further includes a contingency management feature visible from the exterior of the housing, for use if the cognitively impaired individual loses the way.

The present disclosure will now be explained by means of a description of embodiments of a navigation assistance device according to the present disclosure, in which reference is made to the following schematic figure, in which:
Fig. 1: schematically a navigation assistance device for a cognitively impaired person according to the present disclosure is shown;
Fig. 2: schematically the rear and side views of a navigation assistance device for a cognitively impaired person according to the present disclosure are shown.

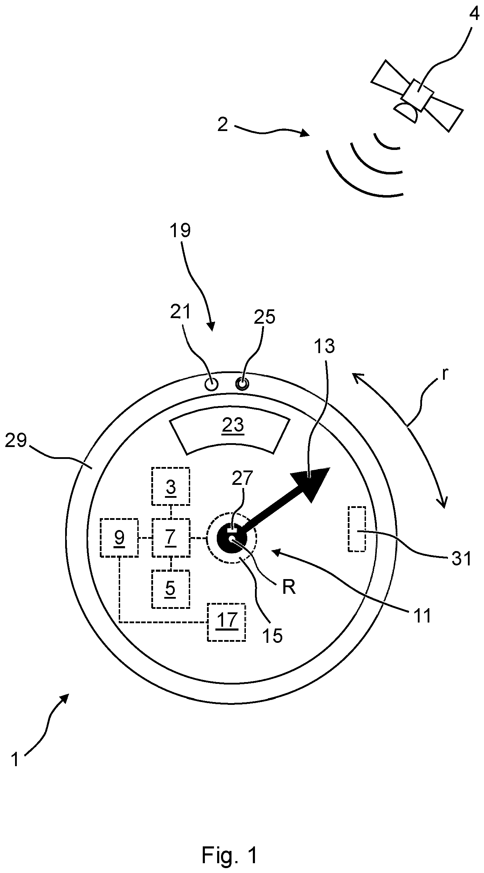

Figure 1 schematically shows a navigation assistance device 1 for a cognitively impaired person according to the present disclosure. The navigation assistance device 1 comprises a position sensor 3. The position sensor 3 having a GPS receiver, that may also be referred to as a GPS module for receiving signals 2 from a satellite-based positioning system 4 for determining a geographic location of the device 1 based on the signals 2 received. The GPS module may be a ATGM336H GPS module.

The navigation assistance device 1 further comprises an orientation sensor 5 for determining an orientation of the device 1 relative to the earth. The orientation sensor 5 having an inertial measurement unit, wherein the inertial measurement unit is provided with an accelerometer, a magnetometer and/or a gyroscope.

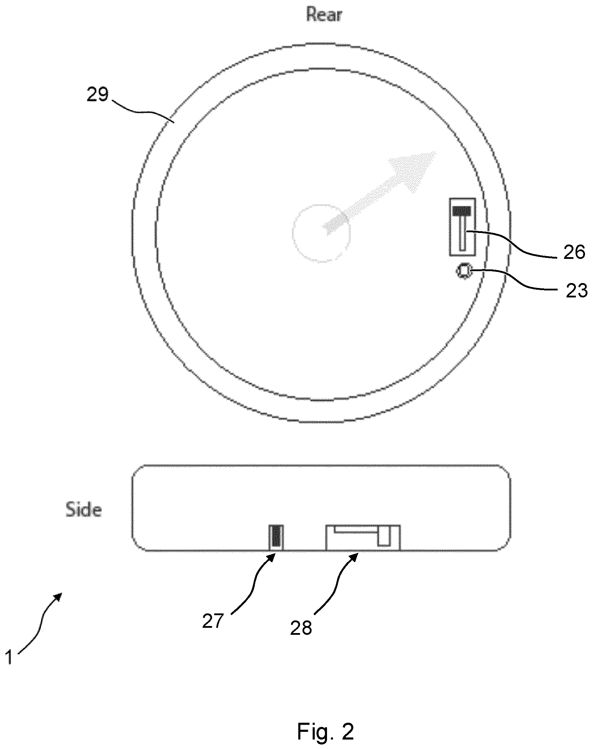

A processing unit 7 of the device 1 which may be a microprocessor is communicatively coupled to the position sensor 3, the orientation sensor 5 and a register 9, wherein the register 9 is arranged for registering a target location. The target location can be set via a target location setting mechanism 23 accessible from the exterior of the housing 29, for example, by a caregiver of a cognitively impaired individual, before handing the navigation assistance device over to the user. The target location setting mechanism 23, shown in Figure 2, may include a set button configured and arranged such that it is unlikely to be pressed by accident. Preferably, only one target location is registered at a time, for example, the user's residence, to avoid exposing the user to the complexity of making choices between different locations. In an embodiment, the caregiver sets the target location by 1) turning on the device 1, 2) going outside near the desired compass destination (often user's home), 3) ensuring there is signal reception, and 3) activating the target location setting mechanism 23, e.g., by pressing the set button. Now that target location is set as reference point for navigation.

It is often advantageous to provide a configuration of the present disclosure, wherein measures are taken to prevent the end-user from accessing the target location setting mechanism 23. Otherwise, a cognitively impaired individual might accidentally or inadvertently change the target location, and, as a consequence, be guided to the wrong address. Accordingly, embodiments of the present disclosure may further include a protective feature 27 configured to restrict user access to the target location setting mechanism 23. In one embodiment, where a target location setting mechanism 23 includes a button to be pressed to set the target location, the protective feature 27 preferably includes a recess in the housing 29, in which the set button is located. The recess should be deep enough that the button cannot be pressed accidentally, but requires a pointy or thin object, such as a pin, pen or needle, to press the button.

The device 1 may further include an on/off switch 26, such as a slide switch, shown in Figure 2, accessible from the exterior of the housing 29. In such embodiments, it is advantageous to provide a further protective feature 28 that is configured to restrict user access to the on/off switch 26. In an embodiment where the on/off switch 26 includes a slide switch or an on/off button, the further protective feature 28 preferably includes a further recess in the housing 29, in which the on/off switch 26 is located. The further recess should be deep enough that the switch is difficult to access accidentally. Alternative configurations of protective features 27 and/or 28 may include a ridge, latch or removable cover. In some implementations, protective feature incudes a plug that may be fitted in a corresponding recess.

The register 9 is communicatively coupled to a receiving unit 17, wherein the receiving unit 17 is arranged for receiving the target location and for providing the received target location to the register 9. No more than one target location is made available for determining the pointing direction parameter.

The processing unit 7 is responsible for all system logic and is arranged for receiving the position of the device 1 from the position sensor 3, the orientation of the device 1 from the orientation sensor 5, and the target location from the register 9. The processing unit 7 is furthermore arranged for determining a pointing direction parameter based on the position of the device 1, the orientation of the device 1 and the target location. No more than one target location is made available for determining the pointing direction parameter by the processing unit 7. In an embodiment, when the target location is entered, it overwrites the previously entered target location.

The navigation assistance device 1 furthermore comprises a pointing unit 11 having a physical, visible, mechanical, pointer 13 and arranged for receiving the pointing direction parameter and directing the visible pointer 13 towards the target location based on the pointing direction parameter. The pointing unit 11 further comprises an actuator 15 provided with an electromotor, for rotating the visible pointer 13 in a rotational direction r about a rotation axis R (perpendicular to the plane of figure 1). An optical sensor 27 is provided, for determining a direction of the visible pointer 13 relative to a housing 29 of the device 1. In an embodiment the electromotor is a stepper motor, however, any other suitable motor may be applied. The optical sensor 27 may be an infrared reflective sensor. In further embodiments any alternative sensor suitable for the function of the further sensor may be used.

Additionally, the processing unit 7 is arranged for determining an azimuth, based on the vector between the geographic location of the device 1 and the target location, and for determining an angle between the azimuth and the orientation of the device 1, determined by the orientation sensor 5, wherein the processing unit 7 is arranged for determining the pointing direction parameter based on the angle.

The processing unit 7 is further arranged for determining that a difference between the pointing direction parameter and an updated pointing direction parameter exceeds a predetermined threshold. The updated pointing direction parameter is based on an updated position of the device 1 and an updated orientation of the device 1 obtained, by the processing unit 7, at a predetermined period after obtaining the position of the device 1 and the orientation of the device 1, wherein the updated pointing direction parameter is provided to the pointing unit 11.

Furthermore, the processing unit 7 is arranged for determining an accuracy of the geographic location of the device 1, the orientation of the device 1 and the presence of the target location and for outputting a status signal. The device comprises a status indication unit 19 for receiving the status signal and outputting a status of the device 1, thereby providing an indication of the accuracy of the geographic location of the device, the accuracy of the orientation of the device position data and the presence of the target location.

The status indication unit 19 is provided with a light source 21 for emitting visible light towards the person for informing the person about the status of the device, a display 23 for informing the person about the status of the device, and/or a sound generator 25 for generating a sound that is within a frequency range that is audible for the person for informing the person about the status of the device.

The navigation assistance device 1 comprises a rechargeable battery 31, for powering the device 1, wherein the processing unit 7 is arranged for determining that the device 1 is stationary based on the orientation of the device 1 and the updated orientation of the device 1 and switching the processing unit 7 in a power saving mode. The rechargeable battery 31 may be a single cell lipo battery with a charging circuit based on a MCP73831, and regulates voltage down to stable 3.3v using a MCP1826 low dropout voltage regulator. Charging power for charging the rechargeable battery 31 may be supplied through a connector of the navigation system device, such as an USB-C connector.

The housing 29 of the navigation assistance device 1 according to the present disclosure contains in its interior the position sensor 3, the orientation sensor 5, the processing unit 7, the register 9, and the receiving unit 17. The housing 29 further contains at least a portion of the pointing unit 11, such as the actuator 15. In an embodiment, the visible pointer 13 is the only portion of the pointing unit 11 that is disposed outside the housing 29. The pointing unit 11 is integrated in the same housing 29 as the position sensor 3, the orientation sensor 5, the processing unit 7, the register 9, and the receiving unit 17, although it is positioned so that the visible pointer 13 can be viewed by the user from outside of the housing 29. Therefore, the pointing unit 11 is an integral element of the single navigation assistance device 1. This is different from the currently known navigation assistance devices, where the pointing mechanism is often carried separately from a secondary device, such as a smartphone.

This streamlined configuration facilitates a better perception of the directional assistance provided by the device to cognitively impaired individuals. In addition, enclosing the above mentioned parts of the navigation assistance device 1 within a housing allows the device to be held with only one hand, adding to its suitability for the intended purpose. Another advantage is that the user needs to carry only one device. Further, this configuration allows the device to be used autonomously.

In an embodiment, the device 1 may be provided with a contingency management feature in the event that the user loses direction despite the directional assistance. The contingency management feature can be disposed such that it is visible from the exterior of the housing 29, preferably, on the rear side of the housing. Examples of suitable contingency management features include a QR code and/or text containing the caregiver's contact information and/or a memory aid for the user. Thus, the cognitively impaired individual using the device of the present disclosure could have the option of using the memory aid or requesting help from others during an episode of confusion.

## Claims

1. A navigation assistance device for a cognitively impaired person comprising:
- a housing having an interior and an exterior;
- a position sensor arranged for receiving signals from a satellite-based positioning system and arranged for determining a geographic location of the device based on the signals received;
- an orientation sensor arranged for determining an orientation of the device relative to the earth;
- a target location setting mechanism accessible from the exterior of the housing;
- a register arranged for registering a target location;
- a processing unit arranged for receiving the position of the device from the position sensor, the orientation of the device from the orientation sensor, and the target location from the register and arranged for determining a pointing direction parameter based on the position of the device, the orientation of the device and the target location;
- a pointing unit comprising a visible pointer and arranged for receiving the pointing direction parameter and directing the visible pointer towards the target location based on the pointing direction parameter;
a power source, preferably an electrical power source such as a rechargeable battery, for powering the device;
wherein the position sensor, the orientation sensor, the register, the processing unit, the power source, and at least a portion of the pointing unit are disposed in the interior of the housing;
and wherein no more than one target location is made available for determining the pointing direction parameter by the processing unit.

2. The device according to claim 1, wherein the position sensor comprises a GPS receiver.

3. The device according to claim 1 or 2, wherein the orientation sensor comprises an inertial measurement unit for determining the orientation of the device relative to the earth, preferably wherein the inertial measurement unit comprises at least one of an accelerometer, a magnetometer and a gyroscope.

4. The device according to any one of the preceding claims, wherein the device comprises a receiving unit arranged for receiving the target location and providing the received target location to the register.

5. The device according to any one of the preceding claims, wherein the processing unit is arranged for determining a bearing, preferably an azimuth, based on the vector between the geographic location of the device and the target location.

6. The device according to any one of the preceding claims, wherein the device is further arranged for determining an angle between the bearing and the orientation of the device, determined by the orientation sensor, wherein the processing unit is further arranged for determining the pointing direction parameter based on the angle.

7. The device according to any one of the preceding claims, wherein the device comprises a protective feature configured to restrict user access to the target location setting mechanism.

8. The device according to any one of the preceding claims, wherein the processing unit is further arranged for determining that a difference between the pointing direction parameter and an updated pointing direction parameter exceeds a predetermined threshold, wherein the updated pointing direction parameter is based on an updated position of the device and an updated orientation of the device obtained, by the processing unit, at a predetermined period after obtaining the position of the device and the orientation of the device and providing the updated pointing direction parameter to the pointing unit.

9. The device according to claim 7, wherein the processing unit is arranged for determining that the device is stationary based on the orientation of the device and the updated orientation of the device and switching the processing unit in a power saving mode.

10. The device according to any one of the preceding claims, wherein the visible pointer is a physical element and wherein the pointing unit comprises an actuator for moving the visible pointer, preferably rotating the visible pointer about a rotation axis.

11. The device according to claim 10, wherein the actuator comprises a electromotor for rotating the visible pointer.

12. The device according to claim 10 or 11, wherein the device comprises a further sensor, preferably an optical sensor, arranged for determining a direction of the visible pointer relative to the housing of the device.

13. The device according to any one of the preceding claims, wherein the processing unit is further arranged for determining an accuracy of the geographic location of the device, the orientation of the device and/or presence of the target location and outputting a status signal, wherein the device further comprises a status indication unit arranged for receiving the status signal and outputting a status of the device providing an indication of the accuracy of the geographic location of the device, the accuracy of the orientation of the device position data and/or presence of the target location.

14. The device according to claim 13, wherein the status indication unit comprises at least one of:
- a light source arranged for emitting visible light towards the person for informing the person about the status of the device;
- a display for informing the person about the status of the device; and
- a sound generator arranged for generating a sound that is within a frequency range that is audible for the person for informing the person about the status of the device.

15. The device according to any one of the preceding claims, wherein the device further comprises an on/off switch and a further protective feature configured to restrict user access to the on/off switch.
